(19) Europäisches Patentamt
European Patent Office
Office européen des brevets

(11) EP 3 409 692 B1

(12) EUROPEAN PATENT SPECIFICATION

(45) Date of publication and mention
of the grant of the patent:
**29.09.2021 Bulletin 2021/39**

(51) Int Cl.:
*C08B 11/08* [(2006.01)]        *B82Y 40/00* [(2011.01)]
*C08B 15/04* [(2006.01)]

(21) Application number: **17744314.0**

(22) Date of filing: **26.01.2017**

(86) International application number:
**PCT/JP2017/002723**

(87) International publication number:
**WO 2017/131084 (03.08.2017 Gazette 2017/31)**

(54) **ANIONICALLY-MODIFIED CELLULOSE NANOFIBER DISPERSION LIQUID AND PRODUCTION METHOD THEREFOR**

ANIONISCH MODIFIZIERTE CELLULOSENANOFASERDISPERSIONSFLÜSSIGKEIT UND HERSTELLUNGSVERFAHREN DAFÜR

LIQUIDE DE DISPERSION DE NANOFIBRES DE CELLULOSE À MODIFICATION ANIONIQUE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.01.2016 JP 2016012403**
**26.01.2016 JP 2016012423**

(43) Date of publication of application:
**05.12.2018 Bulletin 2018/49**

(73) Proprietor: **Nippon Paper Industries Co., Ltd.**
**Tokyo 114-0002 (JP)**

(72) Inventors:
• **FUJII, Takeshi**
**Tokyo 114-0002 (JP)**
• **MURAMATSU, Riichi**
**Tokyo 114-0002 (JP)**
• **TAKAICHI, Satoshi**
**Tokyo 114-0002 (JP)**
• **SHINKURA, Hiroshi**
**Tokyo 114-0002 (JP)**
• **TAMURA, Naoyuki**
**Tokyo 114-0002 (JP)**
• **TADA, Yusuke**
**Tokyo 114-0002 (JP)**
• **TAKAHASHI, Masanari**
**Tokyo 114-0002 (JP)**

(74) Representative: **Carpmaels & Ransford LLP**
**One Southampton Row**
**London WC1B 5HA (GB)**

(56) References cited:
WO-A1-2009/069641    WO-A1-2014/061485
WO-A1-2014/088072    WO-A1-2014/185505
WO-A1-2015/029960    WO-A1-2015/087868
WO-A1-2015/098543    WO-A1-2015/107995
JP-A- 2010 156 068    JP-A- 2010 156 068
JP-A- 2010 242 063    JP-A- 2012 201 740
JP-A- 2012 219 380    JP-A- 2013 067 906
JP-A- 2013 067 906    JP-A- 2013 249 448
JP-A- 2014 040 530    JP-A- 2014 136 775
JP-A- 2014 141 772    JP-A- 2014 141 772
JP-A- 2014 193 580    JP-A- 2015 000 935
JP-A- 2015 098 526    JP-A- 2015 101 694
JP-A- 2015 183 095    JP-A- 2015 183 095
JP-A- 2015 196 693    JP-A- 2015 218 299
JP-A- 2015 218 299    JP-A- 2015 221 844
JP-A- 2015 221 844

**Description**

TECHNICAL FIELD

The present invention relates to an anionically-modified cellulose nanofiber aqueous dispersion.

BACKGROUND ART

Nanotechnology, which is a technology to freely regulate a substance in the nanometer region, that is, in the atom and molecule scale, is expected to bring about various convenient new materials and devices. Fiber in the order of nanometers (nanofiber) has received much attention, since a new physical property that did not exist in conventional fiber is produced when fiber is made thin to its limit. It is expected that an application of such nanofiber enables a cleaning device using a high-performance filter that blocks extremely minute contaminants, enhancement of the strength of chemical fiber, high-performance clothes, or improvement of efficiency of fuel cells.

Various research and development efforts of such nanofiber have been made. For example, in PTL 1, a microfibrillated, anionically-modified cellulose (anionically-modified, microfibrillated plant fiber) is disclosed.

CITATION LIST

PATENT LITERATURE

PTL 1: WO 2011/115154

SUMMARY OF INVENTION

TECHNICAL PROBLEM

However, the anionically-modified, microfibrillated plant fiber disclosed in PTL 1 is not completely nano-defibrated, and further improvements are necessary when the fiber is used in the aforementioned wide variety of usages. In particular, high transparency in a dispersion containing the fiber is desired. Further, in a conventional cellulose nanofiber dispersion, transparency may decline when pulp fibers that are not nano-defibrated remain, and a cellulose nanofiber dispersion having high transparency is demanded. Under such circumstance, the present invention aims to provide an anionically-modified cellulose nanofiber aqueous dispersion having a high transparency, and a production method thereof.

SOLUTION TO PROBLEM

The aforementioned problem is solved by the present invention shown below.

(1) A method for producing an anionically-modified cellulose nanofiber aqueous dispersion, the method comprising:

preparing an aqueous dispersion containing anionically-modified cellulose; and
defibrating the cellulose in the aqueous dispersion,
wherein at least a part of hydroxyl groups in pyranose rings in the anionically-modified cellulose is modified by oxidation or substitution,
wherein an electrical conductivity of the anionically-modified cellulose aqueous dispersion that is subjected to defibration is 500 $\mu$S/cm or lower at a concentration of 1.0 wt% and
wherein a ratio of existence of a type-II crystal to existence of a type-I crystal in the anionically-modified cellulose is 1.5 or higher.

(2) The method according to (1), wherein at least a part of pyranose rings in the anionically-modified cellulose is modified by substitution, and the electrical conductivity of the aqueous dispersion at 1.0 wt% is 200 $\mu$S/cm or lower.
(3) The method according to (1), wherein at least a part of pyranose rings in the anionically-modified cellulose is modified by oxidation, and an amount of carboxyl groups in the cellulose nanofiber is 0.6 to 3.0 mmol/g against an absolute dry weight of the cellulose nanofiber.
(4) The method according to (1) or (2), wherein at least a part of pyranose rings in the anionically-modified cellulose is modified by substitution, and a degree of carboxymethyl substitution per unit glucose of the cellulose nanofiber is 0.02 or higher and lower than 0.4.

(5) An aqueous dispersion containing an anionically-modified cellulose nanofiber, wherein the aqueous dispersion has an electrical conductivity of 500 $\mu$S/cm or lower when measured at a concentration of 1.0 wt% and wherein a ratio of existence of a type-II crystal to existence of a type-I crystal in the anionically-modified cellulose is 1.5 or higher.

(6) The aqueous dispersion according to (5),

wherein the aqueous dispersion has an electrical conductivity of 200 $\mu$S/cm or lower when measured at a concentration of 1.0 wt%.

EFFECTS OF INVENTION

An anionically-modified cellulose nanofiber aqueous dispersion having a high transparency as defined in the claims is provided by the present invention.

DESCRIPTION OF EMBODIMENTS

The present invention is described in more detail below. The term "to" in the present invention includes the end values. In other words, "X to Y" includes the values on both ends, X and Y.

1. Production method of anionically-modified cellulose nanofiber aqueous dispersion

The anionically-modified cellulose nanofiber aqueous dispersion of the present invention (hereinafter referred to as a "dispersion of the present invention") is produced by preparing an aqueous dispersion containing anionically-modified cellulose (hereinafter referred to as a "raw material dispersion"), and defibrating the cellulose in the dispersion.

1-1. Step of preparing raw material dispersion

As a raw material dispersion, it is preferred that an anionically-modified cellulose is uniformly dispersed in a dispersion medium (water), but the raw material dispersion of the present invention includes embodiments such as a mixture in which a part of the anionically-modified cellulose precipitates out, or in which all of the anionically-modified cellulose precipitates out.

(1) Cellulose material

As cellulose materials, those derived from plants (e.g. wood, bamboo, hemp, jute, kenaf, farm waste, fabric, pulp (softwood unbreached kraft pulp (NUKP), softwood bleached kraft pulp (NBKP), hardwood unbleached kraft pulp (LUKP), hardwood bleached kraft pulp (LBKP), softwood unbleached sulfite pulp (NUSP), hardwood bleached sulfite pulp (NBSP), thermomechanical pulp (TMP), recycled pulp, waste paper, etc.), animals (e.g. Ascidiacea), algae, microorganisms (e.g. Acetobacter), or microorganism products, etc., are known. Any of them may be used in the present invention. In the present invention, cellulose fibers derived from plants or microorganisms are preferably used, and cellulose fibers derived from plants are more preferably used.

(2) Anionic modification

Anionic modification is introduction of an anion group(s) into cellulose, specifically introduction of an anion group(s) into pyranose rings by oxidation or substitution. In the present invention, oxidation is reaction to oxidize a hydroxyl group(s) in the pyranose rings directly to a carboxyl group(s). Further, substitution in the present invention is reaction to introduce an anion group(s) into the pyranose rings by substitution reaction other than oxidation.

1) Carboxymethylation

A preferred anion group includes carboxyalkyl groups such as a carboxymethyl group. In the present invention, the carboxyalkyl group is -RCOOH (acid type) or - RCOOM (salt type), wherein R is an alkylene group such as a methylene group and an ethylene group, and M is a metal ion. The carboxyalkylated cellulose may be obtained by a known method, or a commercial product may be used. The degree of carboxyalkyl substitution per unit anhydrous glucose is preferably lower than 0.40. Further, when the anion group is a carboxymethyl group, the degree of carboxymethyl substitution is preferably lower than 0.40. When the degree of substitution is 0.40 or higher, dispersibility of cellulose nanofiber decreases. The lower limit of the degree of carboxyalkyl substitution is preferably 0.01 or higher. In view of operability, the degree of substitution is preferably 0.02 to 0.35, and even more preferably 0.10 to 0.30. An example of a method for producing such carboxyalkylated cellulose includes methods including the steps described below. This modification is substitution. Description is provided below by using carboxymethylated cellulose as an example.

i) A step of mixing a starting material with a solvent and a mercerization agent, and performing mercerization treatment at a reaction temperature of 0 to 70°C, preferably 10 to 60 °C, and a reaction time of 15 min. to 8 h., preferably 30 min. to 7 h.;

ii) Then, a step of adding carboxymethylation agent in an amount of 0.05 to 10.0 folds in mol per a glucose residue, and performing etherification reaction at a reaction temperature of 30 to 90°C, preferably 40 to 80°C, and a reaction time of 30 min. to 10 h., preferably 1 h. to 4 h.

As a starting material, the aforementioned cellulose material may be used. As a solvent, water or lower alcohol, specifically, water, methanol, ethanol, N-propyl alcohol, isopropyl alcohol, N-butanol, isobutanol, tertiary butanol, or a combination thereof that is 3 to 20 times the weight of the starting material may be used. When mixing lower alcohol, its mixing ratio is 60 to 95 wt%. As a mercerization agent, an alkali metal hydroxide, specifically sodium hydroxide or potassium hydroxide, in an amount of 0.5 to 20 times in mol per an anhydrous glucose residue in the starting material may be used.

As mentioned above, the degree of carboxymethyl substitution per unit glucose of cellulose is lower than 0.04, and is preferably 0.01 or higher and lower than 0.40. When carboxymethyl groups are introduced into cellulose, the cellulose exhibits electric repulsion with each other. Thus, the cellulose with carboxymethyl groups introduced therein readily can be nano-defibrated. When the degree of carboxymethyl substitution per unit glucose is less than 0.02, it is possible that nano-defibration becomes incomplete. The degree of substitution of anionically-modified cellulose nanofiber is normally the same as the degree of substitution of cellulose nanofiber.

2) Carboxylation

As an anionically-modified cellulose, carboxylated (oxidized) cellulose can be used. In the present invention, the carboxyl group is -COOH (acid type) or -COOM (salt type), wherein M is a metal ion, as mentioned above. Carboxylated cellulose (also referred to as "oxidized cellulose") may be obtained by carboxylating (oxidizing) the aforementioned cellulose material by a known method. Without being limited thereby, the amount of carboxyl group is preferably 0.6 to 3.0 mmol/g against an absolute dry weight of the anionically-modified cellulose nanofiber, and more preferably 1.0 to 2.0 mmol/g. One example of a carboxylation (oxidation) method is a method of oxidizing the cellulose material in water using an oxidizing agent in the presence of an N-oxyl compound and a compound selected from a group consisting of a bromide, an iodide or a mixture thereof. By this oxidation reaction, a primary hydroxyl group on the C6 position of a glucopyranose ring on the surface of the cellulose is selectively oxidized, and a cellulose fiber having aldehyde groups and carboxyl groups (-COOH) or carboxylate groups (-COO⁻) on its surface is obtained. There is no particular limitation to the concentration of cellulose during the reaction, but a concentration of 5 wt% or lower is preferred.

An N-oxyl compound is a compound that may generate a nitroxyl radical. Any compound that promotes the desired oxidation reaction may be used as the N-oxyl compound. For example, the N-oxyl compound includes 2,2,6,6-tetramethylpiperidine-1-oxy radical (TEMPO) and a derivative thereof (e.g. 4-hydroxy TEMPO). The amount of N-oxyl compound to be used is not limited as long as it is a catalytic amount that can oxidize the cellulose material. For example, the amount may preferably be 0.01 to 10 mmol against 1 g of absolute dry cellulose, more preferably 0.01 to 1 mmol, and even more preferably 0.05 to 0.5 mmol. Further, an amount of about 0.1 to 4 mmol/L against the reaction system is suitable.

A bromide is a compound containing bromine, and an example of the bromide includes an alkali metal bromide that can be ionized by dissociation in water. Further, an iodide is a compound containing iodine, and an example of the iodide includes an alkali metal iodide. The amount of bromide or iodide to be used may be selected from a range that can promote oxidation. The total amount of bromides and iodides is, for example, preferably 0.1 to 100 mmol against 1 g of absolute dry cellulose, more preferably 0.1 to 10 mmol, and even more preferably 0.5 to 5 mmol. This modification is brought about by an oxidation reaction.

As an oxidizing agent, known products may be used, which include, for example, halogens, hypohalous acid, halous acids, perhalogen acids or salts thereof, halogen oxides or peroxide. In particular, sodium hypochlorite which is low in cost, and low in environmental load is preferable. The appropriate amount of oxidizing agent to be used is preferably 0.5 to 500 mmol, more preferably 0.5 to 50 mmol, even more preferably 1 to 25 mmol, and most preferably 3 to 10 mmol, against 1 g of absolute dry cellulose. Further, 1 to 40 mol against 1 mol of N-oxyl compound is preferred.

The step of oxidizing cellulose is such that the reaction proceeds efficiently even under a relatively mild condition. Hence, the reaction temperature is preferably 4 to 40°C, or it may be at room temperature of about 15 to 30°C. As the reaction proceeds, carboxyl groups start to form in the cellulose, whereby the pH of the reaction solution decreases. To let oxidation proceed efficiently, it is preferable to add an alkaline solution such as a sodium hydroxide solution to maintain the pH of the reaction solution at 8 to 12, and more preferably at about 10 to 11. Water is preferred as the reaction medium for the ease of handling and the low occurrence of a side reaction. The reaction time of the oxidation reaction may be adjusted as necessary according to the degree of the progress of oxidation, and it is normally 0.5 to 6 h., for example, about 0.5 to 4 h.

Oxidation may be performed in two stages. For example, the oxidized cellulose that is filtered out after the reaction completes may be oxidized again under a same or different reaction condition to be efficiently oxidized without being inhibited by salt that forms as a byproduct in the reaction in the first stage.

Another example of a carboxylation (oxidation) method includes a method of oxidizing the cellulose material by bringing an ozone-containing gas in contact with the cellulose material. This oxidation reaction oxidizes at least the hydroxyl groups on position 2 and position 6 of the glucopyranose ring, and decomposes the cellulose chain. The ozone concentration of the ozone-containing gas is preferably 50 to 250 $g/m^3$, and more preferably 50 to 220 $g/m^3$. The amount of ozone to be added against the cellulose material is preferably 0.1 to 30 weight parts against 100 weight parts of a solid content of the cellulose material, and more preferably 5 to 30 weight parts. The ozone treatment temperature is preferably 0 to 50°C, and more preferably 20 to 50°C. The ozone treatment time is about 1 to 360 min., and preferably about 30 to 360 min. without being particularly limited thereby. An ozone treatment condition in these ranges prevents excessive oxidation and decomposition of cellulose, and provides a good yield of oxidized cellulose. After the ozone treatment, an additional oxidation treatment may be performed by using an oxidizing agent. The oxidizing agent to be used in the additional oxidation treatment is not particularly limited, and includes chlorine-based compounds such as chlorine dioxide, sodium chloride, etc., or oxygen, hydrogen peroxide, persulfuric acid, peracetic acid, etc. It is possible to perform the additional oxidation treatment by dissolving the oxidizing agent in water or a polar organic solvent such as alcohol to form an oxidizing agent solution, and immersing the cellulose material in the solution.

The amount of carboxyl group in the oxidized cellulose may be adjusted by controlling the reaction condition, such as the amount of the oxidizing agent to be added or the reaction time. It is preferred that the amount of carboxyl group in the anionically-modified cellulose nanofiber is the same as the amount of carboxyl group in the cellulose nanofiber.

3) Esterification

As the anionically-modified cellulose, an esterified cellulose may be used. Such cellulose may be obtained by a method of mixing a powder or an aqueous solution of phosphoric acid compound A with the aforementioned cellulose material, or a method of adding an aqueous solution of a phosphoric acid compound A to a slurry of the cellulose material. A phosphoric acid compound A includes phosphoric acid, polyphosphoric acid, phosphorous acid, phosphonic acid, polyphosphonic acid or an ester thereof. They may be in the form of a salt. Among these, a compound having a phosphoric acid group is preferred due to its low cost, ease of handling, and the capacity to improve defibration efficiency by the introduction of the phosphoric acid group into cellulose in the pulp fiber. Examples of a compound having a phosphoric acid group includes phosphoric acid, sodium dihydrogenphosphate, disodium hydrogenphosphate, trisodium phosphate, sodium pyrophosphate, sodium metaphosphate, potassium dihydrogenphosphate, dipotassium hydrogenphosphate, tripotassium phosphate, potassium pyrophosphate, potassium metaphosphate, ammonium dihydrogenphosphate, diammonium hydrogenphosphate, triammonium phosphate, ammonium pyrophosphate, ammonium metaphosphate. They may be used alone or as a combination of two or more in the introduction of a phosphoric acid group. Among these, phosphoric acid, a sodium salt of phosphoric acid, a potassium salt of phosphoric acid group, and an ammonium salt of phosphoric acid are preferred due to high efficiency in introducing phosphoric acid, ease of defibration in the defibration step shown below, and ease in industrial application. Sodium dihydrogenphosphate and disodium hydrogenphosphate are particularly preferred. The aforementioned phosphoric acid compound A is preferably used as an aqueous solution since the reaction proceeds in a homogenous manner and the efficiency of introduction of phosphoric acid increases in such solution. The pH of the aqueous solution of a phosphoric acid compound A is preferably 7 or lower since the efficiency of introduction of phosphoric acid increases, and a pH of 3 to 7 is preferable to regulate hydrolysis of pulp fiber.

The following method is given as an example of a method for producing phosphorylated cellulose. A phosphoric acid compound A is added under agitation to a suspension of a cellulose material with a solid concentration of 0.1 to 10 wt% to introduce a phosphoric acid group into cellulose. The amount of phosphoric acid compound A to be added is preferably 0.2 to 500 weight parts in an amount of phosphorous element against 100 weight parts of the cellulose material, and more preferably 1 to 400 weight parts. When the amount of the phosphoric acid compound A is equal to or higher than the aforementioned lower limit, the yield of the fine fibrous cellulose may be increased even more. However, even when the amount exceeds the aforementioned upper limit, the effect on increase in the yield reaches its peak, and thus, such ratio is not preferable from the cost perspective.

A powder or aqueous solution of compound B may be added in addition to the phosphoric acid compound A. Compound B is not particularly limited, but basic compounds having nitrogen are preferred. The "basic" is defined as a property that the aqueous solution exhibits pink to red in the presence of a phenolphthalein indicator, or the property that the aqueous solution has a pH larger than 7. The basic compound having nitrogen used in the present invention is not particularly limited as long as the effect of the present invention can be produced, but a compound having an amino group is preferred. Examples include urea, methyl amine, ethyl amine, trimethyl amine, triethyl amine, monoethanol amine, diethanol amine, triethanol amine, pyridine, ethylene diamine, hexamethylene diamine, without being limited thereby. Urea is preferred in particular for its low cost and ease of handling. The amount of compound B to be added is preferably 2 to 1000 weight parts against 100 weight parts of the solid content of the cellulose material, and more preferably 100 to 700 weight parts. The reaction temperature is preferably 0 to 95°C, and more preferably 30 to 90°C. The reaction time is about 1 to 600 min. and preferably 30 to 480 min. without being limited thereby. When the condition of the esterification reaction is in these ranges, cellulose is prevented from easy dissolution due to excessive esterification, and a good yield of phosphorylated cellulose is obtained. After the obtained phosphorylated cellulose suspension is dehydrated, it is preferably subjected to heat treatment at 100 to 170°C to suppress hydrolysis of cellulose. Further, when water is present in the heat treatment, it is preferred that heating is performed at 130°C or lower, preferably at 110°C or lower to remove water, and then, further heating is performed at 100 to 170°C.

The degree of substitution of phosphoric acid group per unit glucose of phosphorylated cellulose is preferably 0.001 or higher and lower than 0.40. By introducing a phosphoric acid group to cellulose, an electric repulsion occurs between the cellulose. Thus, cellulose to which the phosphoric acid group is introduced may be easily nano-defibrated. When the degree of phosphoric acid group per a glucose unit is smaller than 0.001, the cellulose may not be fully nano-defibrated. On the other hand, when the degree of substitution of phosphoric acid group per a glucose unit is greater than 0.40, the cellulose will swell or dissolve so that it cannot be obtained in the form of a nanofiber. To perform efficient defibration, the phosphorylated cellulose material obtained above is preferably boiled and then washed with cold water. These modifications by esterification are brought about by substitution reaction. It is preferred that the degree of substitution of the anionically-modified cellulose nanofiber is the same as the degree of substitution of cellulose nanofiber.

A ratio of existence of a type-II crystal in the anionically-modified cellulose used in the present invention is 1.5 times or higher against a type-I crystal. When the ratio of existence of the type-II crystal is in this range, highly transparent anionically-modified cellulose nanofiber aqueous dispersion may be obtained. From this point of view, the ratio of existence is preferably 1.8 times or higher, and more preferably 2 times or higher. The reason for this is presumed as follows without being limited thereby. An anion group tends to be easily incorporated into the type-II crystal of cellulose during anionic modification. Hence, cellulose having a type-II crystal at a ratio of existence in the aforementioned range incorporates anion groups in a relatively homogenous manner so that the variation between the fibers is minimized. Hence, nano-defibration proceeds homogenously in the following defibration step so that the unevenness among fibers diminishes. As a result, non-defibrated parts are hard to remain, and thus, the transparency of the dispersion increases. The method of measuring the ratio of existence of the type-II crystal is described below.

(3) Aqueous dispersion

As a dispersion to be subjected to the subsequent defibration step, an aqueous dispersion of the anionically-modified cellulose (raw material dispersion) is prepared. The concentration of anionically-modified cellulose is preferably 0.01 to 10 wt%. The electrical conductivity of the raw material dispersion to be subjected to a defibration step is 500 $\mu$S/cm or lower when measured at a concentration of 1.0 wt%. When the electrical conductivity exceeds the upper limit, nano-defibration does not proceed fully in the subsequent defibration step. The reason for this is presumed as follows without being limited thereby. The fact that the electrical conductivity of cellulose to be subjected to defibration is lower than a certain value indicates that the concentration of inorganic salts dissolving in the aqueous dispersion for defibration prepared using the cellulose is lower than a certain value. When the concentration of inorganic salts, etc. is low, electrostatic repulsion between the fibers easily occurs, and the defibration easily progresses. In particular, when an anionically-modified cellulose modified by substitution is used, the electrical conductivity of 200 $\mu$S/cm or lower is preferred.

The reason that the preferred range of the electrical conductivity of an aqueous dispersion differs by the modification method is presumed as follows, without being limited thereby. In the anionically-modified cellulose obtained by oxidation such as carboxylated cellulose, etc., limited sections of the pyranose ring are oxidized. Hence, variation in the oxidation reaction among fibers is small and the reaction tends to proceed in a relatively homogenous manner. Accordingly, the anionically-modified cellulose obtained by oxidation contains sections that are prone to electrostatic repulsion uniformly, so it can easily be nano-defibrated. Thus, even if the electrical conductivity of the aqueous dispersion is high, i.e. 500 $\mu$S/cm, a cellulose nanofiber dispersion having a sufficiently high transparency may be obtained. In this case, the electrical conductivity of the raw material dispersion is preferably 400 $\mu$S/cm or lower, more preferably 350 $\mu$S/cm or lower and even more preferably 300 $\mu$S/cm or lower.

Meanwhile, in the anionically-modified cellulose obtained by substitution reaction, not by oxidation, such as carboxymethylated cellulose, etc., substitution reaction may occur at multiple sections of the pyranose ring. Accordingly, variation in the substitution reaction among fibers becomes large, and the reaction does not proceed in a homogenous manner. Accordingly, the anionically-modified cellulose obtained by substitution tends to have sections that are prone to electrostatic repulsion unevenly, so it is not easily nano-defibrated. Thus, it is preferred that the electrical conductivity of the aqueous dispersion before defibration is low, i.e. 200 μS/cm or lower, to obtain a cellulose nanofiber dispersion having a sufficiently high transparency. In this case, the electrical conductivity of the raw material dispersion is preferably 150 μS/cm or lower, more preferably 120 μS/cm or lower and even more preferably 100 μS/cm or lower. From the same point of view, the upper limit of the degree of substitution per unit glucose of the anionically-modified cellulose obtained by substitution and the upper limit of that of the cellulose nanofiber obtained from the anionically-modified cellulose are preferably lower than 0.40, more preferably 0.35 or lower, and the lower limits are preferably 0.01 or higher, more preferably 0.02 or higher, and even more preferably 0.10 to 0.30.

A measurement of electrical conductivity at a concentration of 1.0 wt% includes a direct measurement of electrical conductivity in an aqueous dispersion with a concentration of 1.0 wt% or a conversion of a measurement of electrical conductivity obtained using an aqueous dispersion with a concentration other than 1.0 wt% to a value at a concentration of 1.0 wt%. The electrical conductivity of a measurement at a concentration of 1.0 wt% may simply be referred to as the "electrical conductivity of the present invention."

The pH of the raw material dispersion may be appropriately adjusted using acid or alkali, but neutral (pH 6.5 to 7.5, preferably pH 6.8 to 7.2) is preferred. When the raw material dispersion is neutral, the anion group forms a salt (e.g. -$CH_2COONa$), and nano-defibration may easily proceed in the defibration step.

1-2. Defibration step

In this step, the anionically-modified cellulose in the raw material dispersion is defibrated. The device used in defibration is not limited, but a device that can apply a strong shear force on the dispersion, such as a high speed rotation type, a colloid mill type, a high pressure type, a roll mill type, or a ultrasonic type device. For efficient defibration, it is preferable to use a wet type high pressure or ultra-high pressure homogenizer that can apply a pressure of 50 MPa or higher as well as apply a strong shear force to the aqueous dispersion. The aforementioned pressure is preferably 100 MPa or higher, and even more preferably 140 MPa or higher. Further, prior to defibration and dispersion treatment using the high pressure homogenizer, a preliminary treatment may be carried out by using a known mixing, agitating, emulsifying or dispersing device such as a high-speed shear mixer as necessary.

2. Anionically-modified cellulose nanofiber aqueous dispersion

In the thus obtained anionically-modified cellulose nanofiber aqueous dispersion of the present invention, fine fibers having a fiber width of about 2 to 50 nm, and an aspect ratio of 100 or higher are dispersed in water. The aqueous dispersion of the present invention has an extremely high transparency. As mentioned above, the high transparency is due to a homogenous nano-defibration of fiber, but providing an accurate explanation on this point in writing is not realistic.

Change in the ratio of existence of the type-II crystal before and after defibration is very little, so the ratio of existence of type-II crystal of the anionically-modified cellulose nanofiber is preferably the aforementioned range. Further, change in the electrical conductivity of the aqueous dispersion before and after defibration is very little. Accordingly, the anionically-modified cellulose nanofiber aqueous dispersion of the present invention preferably has the electrical conductivity in the aforementioned range when measured using an aqueous dispersion of 1.0 wt%.

EXAMPLES

The embodiments of the present invention is described by Examples below, but the present invention is not limited thereby. Measurement methods of physical properties are described below.

<Degree of carboxymethyl substitution per unit glucose>

Carboxymethylated cellulose fiber (absolute dry weight) of about 2.0 g was precisely weighed and put in a 300 mL volume stoppered Erlenmeyer flask. To the flask was added 100 mL of a solution that was obtained by adding 100 mL of high grade concentrated nitric acid to 900 mL of methanol, shaking the solution for 3 h., and converting carboxymethylated cellulose salt (CM cellulose) to a hydrogen-type CM cellulose. The hydrogen type CM cellulose (absolute dry weight) 1.5 to 2.0 g was precisely weighed and put in a 300 mL volume stoppered Erlenmeyer flask. The hydrogen type CM cellulose was wetted by 15 mL of 80 wt% methanol, and 100 mL of 0.1N NaOH was added to be shaken at room temperature for 3 h. Phenolphthalein was used as an indicator to perform back titration of excessive NaOH with IN of $H_2SO_4$. The degree of carboxymethyl substitution (DS) was calculated by the following formula.

$$A = [(100 \times F' - (0.1N\ H_2SO_4)(ml) \times F) \times 0.1]/(\text{absolute dry weight of Hydrogen type CM}$$

$$\text{cellulose (g))}$$

$$DS = 0.162 \times A/(1 - 0.058 \times A)$$

A: Amount of IN NaOH (mL) required for neutralizing 1 g of Hydrogen type CM cellulose
F: Factor of 0.1N $H_2SO_4$
F': Factor of 0.1N NaOH

<Measurement method of amount of carboxyl group>

A slurry containing 0.5 wt% of carboxylated cellulose (aqueous dispersion) was prepared in an amount of 60 mL, which was adjusted to pH 2.5 by adding 0.1 M hydrochloric acid solution, then, the electrical conductivity was measured as 0.05N sodium hydroxide solution was dropped until a pH of 11 to calculate the amount of carboxyl group from the amount of sodium hydroxide (a) consumed in the neutralization stage of weak acid, which shows a mild change in the electrical conductivity, using the following formula:

$$\text{amount of carboxyl group [mmol/g carboxylated cellulose]} = a\ [mL] \times 0.05/\text{carboxylated}$$

$$\text{cellulose mass [g].}$$

<Transparency>

The transparency (transmittance of light of 660 nm) of cellulose nanofiber aqueous dispersion (solid concentration 1.0 wt%) was measured using a UV spectrophotometer U-3000 (Hitachi High-Technologies Corporation).

From the viewpoint of using cellulose nanofiber for various usages, the transparency of cellulose nanofiber aqueous dispersion at a solid concentration of 1.0 wt% is preferably 70% or higher.

<Electrical conductivity>

Aqueous dispersion of anionically-modified cellulose before defibration, adjusted to a solid concentration of 1.0 wt%. in an amount of 200 g was agitated in a mixer (TESCOM, TM8100 type) for 5 min. to disperse fibers. The mixture was adjusted to about pH 7.0, then measured with an electrical conductivity meter (HORIBA, ES-71 type).

<Ratio of crystal types of cellulose>

An anionically-modified cellulose fiber was freeze-dried using liquid nitrogen, compressed and formed into a tablet-shaped pellet. Then, the sample was measured using an X-ray diffractometer (XPert PRO MPD by PANalytical). The obtained graph was subjected to peak separation by a graph analysis software PeakFlt (Hulinks), and crystal types I and II were identified based on the following diffraction angles. These ratios were calculated using the ratio of areas of the peaks below.

Type I Crystal: $2\theta = 14.8°, 16.8°, 22.6°$
Type II Crystal: $2\theta = 12.1°, 19.8°, 22.0°$

[EXAMPLE A1]

To a reactor capable of agitating pulp was introduced pulp (LBKP by Nippon Paper Co.) in a dry weight of 250 g, and 112 g of 50 wt% sodium hydroxide solution and 67 g of water were added under agitation. The mixture was mercerized by agitation at 30°C for 30 min., then, 364 g of a 35 wt% sodium monochloroacetate solution was added under agitation. Subsequently, the mixture was agitated at 30°C for 60 min. and heated to 70°C over 30 min., and a reaction was performed at 70°C for 1 h. Then, the reaction product was taken out, and carboxymethylated pulp with a degree of carboxymethyl substitution per unit glucose of 0.25 was obtained.

The obtained carboxymethylated pulp was dispersed in water to obtain a dispersion with a solid concentration of 1.0 wt%, and washing was repeated 5 times using a centrifugal dehydrator (Kokusan Co. Ltd.) under a condition of 2000 rpm for 15 min.

An aqueous dispersion having a solid concentration of the washed carboxymethylated pulp of 1.0 wt% was prepared, and adjusted to a pH of about 7.0 using sodium hydroxide. The electrical conductivity of the aqueous dispersion was measured. The aqueous dispersion was treated 5 times by a high pressure homogenizer at 20°C under a pressure of 140 MPa to obtain cellulose nanofiber aqueous dispersion derived from carboxymethylated pulp.

[EXAMPLE A2]

A cellulose nanofiber aqueous dispersion derived from carboxymethylated pulp was obtained by the same process as that in EXAMPLE A1, except that the agitation time during mercerization was 45 min. The degree of carboxymethyl substitution per glucose unit of the obtained cellulose was 0.27.

[EXAMPLE A3]

A cellulose nanofiber aqueous dispersion derived from carboxymethylated pulp was obtained by the same process as that in EXAMPLE A1, except that the agitation time during mercerization was 30 min. and the washing was repeated 4 times. The degree of carboxymethyl substitution per glucose unit of the obtained cellulose was 0.26.

[EXAMPLE A4]

A cellulose nanofiber aqueous dispersion derived from carboxymethylated pulp was obtained by the same process as that in EXAMPLE A1, except that the agitation time during mercerization was 15 min. The degree of carboxymethyl substitution per glucose unit of the obtained cellulose was 0.27.

[EXAMPLE A5]

A bleached, unbeaten softwood kraft pulp (NBKP by Nippon Paper Co.) in an amount of 5 g (absolute dry weight) was added to 500 mL of an aqueous solution that dissolves 39 mg of TEMPO (Sigma Aldrich) and 514 mg of sodium bromide, and the mixture was agitated until the pulp was dispersed evenly. A sodium hypochlorous acid solution was added to the reaction mixture to an amount of 5.5 mmol/g, and oxidation reaction was started. The pH in the mixture decreased during the reaction, but a 3M sodium hydroxide solution was added gradually to adjust the pH to 10. The reaction was ended when the sodium hypochlorous acid was consumed and the pH of the mixture stopped changing. Pulp was separated from the reacted mixture was filtered with a glass filter, and the pulp was fully washed with water to obtain an oxidized pulp (may be referred to hereinafter as "carboxylated cellulose," 2carboxylated pulp," or "TEMPO oxidized pulp"). The pulp yield was 90%, and the time required for oxidation was 90 min., and the amount of a carboxyl group was 1.6 mmol/g. Then, the TEMPO oxidized pulp was dispersed in water to form a 1.0 wt% dispersion, and washing was repeated 5 times using a centrifugal dehydrator (Kokusan Co. Ltd.) under a condition of 2000 rpm for 15 min.

The washed TEMPO-oxidized pulp was dispersed in water to form 1.0 wt% dispersion, and treated 5 times by a high pressure homogenizer (20°C, 150 MPa) to obtain a cellulose nanofiber aqueous dispersion derived from carboxylated pulp.

[EXAMPLE A6]

A cellulose nanofiber aqueous dispersion derived from carboxylated pulp was obtained by the same process as that in EXAMPLE A5, except that the washing was repeated 3 times.

[COMPARATIVE EXAMPLE A1]

A cellulose nanofiber aqueous dispersion derived from carboxylated pulp was obtained by the same process as that in EXAMPLE A5, except that the washing was repeated 2 times.

[COMPARATIVE EXAMPLE A2]

A cellulose nanofiber aqueous dispersion was obtained by the same process as that in EXAMPLE A1, except that anionic modification is not performed.

The results are shown in Table 1. In EXAMPLES A1 to A6, cellulose was fully nano-defibrated, and since the reaction proceeded uniformly, so the dispersion had high transparency. Meanwhile, in COMPARATIVE EXAMPLES A1 and A2, although nano-defibration of cellulose was observed, non-defibrated fiber remained, and the transparency was low. In particular, in COMPARATIVE EXAMPLE A1, the electrical conductivity based on the salt concentration of cellulose was high due to insufficient washing, the nano-defibration of cellulose was inhibited, and the transparency was low.

[EXAMPLE B1]

To a reactor capable of agitating pulp was introduced pulp (LBKP by Nippon Paper Co.) in a dry weight of 250 g, and 112 g of 50 wt% sodium hydroxide solution and 67 g of water were added under agitation. The mixture was mercerized by agitation at 30°C for 30 min., then, 364 g of a 35 wt% sodium monochloroacetate solution was added under agitation. Subsequently, the mixture was agitated at 30°C for 60 min. and heated to 70°C over 30 min., and a reaction was performed at 70°C for 1 h. Then, the reaction product was taken out, and carboxymethylated pulp with a degree of carboxymethyl substitution per unit glucose of 0.25 was obtained.

The obtained carboxymethylated pulp was dispersed in water to obtain a dispersion with a solid concentration of 1.0 wt%, and washing was repeated 5 times using a centrifugal dehydrator (Kokusan Co. Ltd.) under a condition of 2000 rpm for 15 min.

An aqueous dispersion having a solid concentration of the washed carboxymethylated pulp of 1.0 wt% was prepared, and adjusted to a pH of about 7.0 using sodium hydroxide. The electrical conductivity of the aqueous dispersion was measured. The aqueous dispersion was treated 5 times by a high pressure homogenizer at 20°C under a pressure of 140 MPa to obtain cellulose nanofiber aqueous dispersion derived from carboxymethylated pulp.

[EXAMPLE B2]

A cellulose nanofiber aqueous dispersion derived from carboxymethylated pulp was obtained by the same process as that in EXAMPLE B1, except that the agitation time during mercerization was 45 min. The degree of carboxymethyl substitution per unit glucose of the obtained cellulose was 0.27.

[EXAMPLE B3]

A cellulose nanofiber aqueous dispersion derived from carboxymethylated pulp was obtained by the same process as that in EXAMPLE B1, except that the agitation time during mercerization was 30 min. and the washing was repeated 4 times. The degree of carboxymethyl substitution per glucose unit of the obtained cellulose was 0.26.

COMPARATIVE [EXAMPLE B4]

A cellulose nanofiber aqueous dispersion derived from carboxymethylated pulp was obtained by the same process as that in EXAMPLE B1, except that the agitation time during mercerization was 15 min. The degree of carboxymethyl substitution per glucose unit of the obtained cellulose was 0.27.

[COMPARATIVE EXAMPLE B1]

A cellulose nanofiber aqueous dispersion derived from carboxymethylated pulp was obtained by the same process as that in EXAMPLE B1, except that the agitation time during mercerization was 30 min., and 35 wt% sodium monochloroacetate solution was added in an amount of 546 g instead of 364 g, and the washing was repeated 2 times. The degree of carboxymethyl substitution per glucose unit of the obtained cellulose was 0.40.

[COMPARATIVE EXAMPLE B2]

A cellulose nanofiber aqueous dispersion was obtained by the same process as that in EXAMPLE B1, except that anionic modification was not performed.

The results are shown in Table 2. In EXAMPLES B1 to B3 and COMPARATIVE EXAMPLE B4, cellulose was fully nano-defibrated, and since the reaction proceeded uniformly, the dispersion had high transparency. Meanwhile, in COMPARATIVE EXAMPLE B1, although nano-defibration of cellulose was observed, the reaction was not uniform, non-defibrated fiber remained, and the transparency was low. In COMPARATIVE EXAMPLE B2, the nano-defibration of cellulose did not proceed, and the transparency was low.

[Table 1]

| | Degree of carboxymethyl substitution | Amount of Carboxyl Group | Transparency | Electric Conductivity | Mercerization Time | No. of Repetition of Washing |
|---|---|---|---|---|---|---|
| | | mmol/g | % | μS/cm | min. | times |
| Example A1 | 0.25 | - | 94 | 107 | 60 | 5 |
| Example A2 | 0.27 | - | 82 | 70 | 45 | 5 |
| Example A3 | 0.26 | - | 79 | 148 | 30 | 4 |
| Example A4 | 0.27 | - | 75 | 91 | 15 | 5 |
| Example A5 | - | 1.60 | 91 | 146 | - | 5 |
| Example A6 | - | 1.60 | 84 | 338 | - | 3 |
| Comp. Example A1 | - | 1.60 | 65 | 1490 | - | 2 |
| Comp. Example A2 | - | - | 31 | 653 | - | - |

[Table 2]

| | Degree of carboxymethyl substitution | Transparency | Ratio of existence of type-II crystal to type-I crystal | Electric conductivity | Mercerization time | No. of repetition of washing |
|---|---|---|---|---|---|---|
| | | % | folds | μS/cm | min. | times |
| Example B1 | 0.25 | 94 | 3.0 | 107 | 60 | 5 |
| Example B2 | 0.27 | 82 | 2.5 | 70 | 45 | 5 |
| Example B3 | 0.26 | 79 | 1.7 | 148 | 30 | 4 |
| Comp. Example B4 | 0.27 | 75 | 1.1 | 91 | 15 | 5 |
| Comp. Example B1 | 0.40 | 51 | 2.1 | 220 | 30 | 2 |
| Comp. Example B2 | 0.00 | 31 | 0.0 | 653 | - | - |

It is clear from the results above that the cellulose nanofiber dispersion of the present invention has high transparency.

**Claims**

1. A method for producing an anionically-modified cellulose nanofiber aqueous dispersion, the method comprising:

   preparing an aqueous dispersion containing anionically-modified cellulose; and
   defibrating the cellulose in the aqueous dispersion,
   wherein at least a part of hydroxyl groups in pyranose rings in the anionically-modified cellulose is modified by oxidation or substitution,
   wherein an electrical conductivity of the anionically-modified cellulose aqueous dispersion that is subjected to defibration is 500 $\mu$S/cm or lower at a concentration of 1.0 wt%, and
   wherein a ratio of existence of a type-II crystal to existence of a type-I crystal in the anionically-modified cellulose is 1.5 or higher.

2. The method according to claim 1, wherein at least a part of pyranose rings in the anionically-modified cellulose is modified by substitution, and the electrical conductivity of the aqueous dispersion at 1.0 wt% is 200 $\mu$S/cm or lower.

3. The method according to claim 1, wherein at least a part of pyranose rings in the anionically-modified cellulose is modified by oxidation, and an amount of carboxyl groups in the cellulose nanofiber is 0.6 to 3.0 mmol/g against an absolute dry weight of the cellulose nanofiber.

4. The method according to claim 1 or 2, wherein at least a part of pyranose rings in the anionically-modified cellulose is modified by substitution, and a degree of carboxymethyl substitution per unit glucose of the cellulose nanofiber is 0.02 or higher and lower than 0.4.

5. An aqueous dispersion containing an anionically-modified cellulose nanofiber, wherein the aqueous dispersion has an electrical conductivity of 500 $\mu$S/cm or lower when measured at a concentration of 1.0 wt%, and wherein a ratio of existence of a type-II crystal to existence of a type-I crystal in the anionically-modified cellulose nanofiber is 1.5 or higher.

6. The aqueous dispersion according to claim 5,
   wherein the aqueous dispersion has an electrical conductivity of 200 $\mu$S/cm or lower when measured at a concentration of 1.0 wt%.

**Patentansprüche**

1. Verfahren zum Herstellen einer wässrigen Dispersion anionisch modifizierter Cellulose-Nanofasern, wobei das Verfahren umfasst:

   Zubereiten einer wässrigen Dispersion, die anionisch modifizierte Cellulose enthält; und
   Defibrieren bzw. Zerfasern der Cellulose in der wässrigen Dispersion,
   wobei zumindest ein Teil der Hydroxygruppen in Pyranoseringen in der anionisch modifizierten Cellulose durch Oxidation oder Substitution modifiziert wird,
   wobei eine elektrische Leitfähigkeit der wässrigen Dispersion anionisch modifizierter Cellulose, die einer Defibrierung bzw. Zerfaserung unterzogen wird, 500 $\mu$S/cm oder weniger bei einer Konzentration von 1,0 Gew.-% beträgt, und wobei ein Verhältnis einer Existenz eines Typ-II-Kristalls zu einer Existenz eines Typ-I-Kristalls in der anionisch modifizierten Cellulose 1,5 oder mehr beträgt.

2. Verfahren nach Anspruch 1, wobei zumindest ein Teil der Pyranoseringe in der anionisch modifizierten Cellulose durch Substitution modifiziert wird und die elektrische Leitfähigkeit der wässrigen Dispersion bei 1,0 Gew.-% 200 $\mu$S/cm oder weniger beträgt.

3. Verfahren nach Anspruch 1, wobei zumindest ein Teil der Pyranoseringe in der anionisch modifizierten Cellulose durch Oxidation modifiziert wird und eine Menge an Carboxylgruppen in der Cellulose-Nanofaser 0,6 bis 3,0 mmol/g gegenüber einem absoluten Trockengewicht der Cellulose-Nanofaser beträgt.

4. Verfahren nach Anspruch 1 oder 2, wobei zumindest ein Teil der Pyranoseringe in der anionisch modifizierten Cellulose durch Substitution modifiziert wird und ein Grad an Carboxymethyl-Substitution pro Glucoseeinheit der Cellulose-Nanofaser 0,02 oder mehr und weniger als 0,4 beträgt.

5. Wässrige Dispersion, die eine anionisch modifizierte Cellulose-Nanofaser enthält, wobei die wässrige Dispersion eine elektrische Leitfähigkeit von 500 $\mu$S/cm oder weniger gemessen bei einer Konzentration von 1,0 Gew.-% aufweist, und wobei ein Verhältnis einer Existenz eines Typ-II-Kristalls zu einer Existenz eines Typ-I-Kristalls in der anionisch modifizierten Cellulose 1,5 oder mehr beträgt.

6. Wässrige Dispersion nach Anspruch 5, wobei die wässrige Dispersion eine elektrische Leitfähigkeit von 200 $\mu$S/cm oder weniger gemessen bei einer Konzentration von 1,0 Gew.-% aufweist.

**Revendications**

1. Procédé de production d'une dispersion aqueuse de nanofibres de cellulose à modification anionique, le procédé comprenant :

   la préparation d'une dispersion aqueuse contenant de la cellulose à modification anionique ; et
   le défibrage de la cellulose dans la dispersion aqueuse,
   dans lequel au moins une partie des groupes hydroxyle dans les cycles de pyranose dans la cellulose à modification anionique sont modifiés par oxydation ou substitution,
   dans lequel une conductivité électrique de la dispersion aqueuse de cellulose à modification anionique qui est soumise au défibrage est de 500 $\mu$S/cm ou inférieure à une concentration de 1,0 % en poids, et
   dans lequel un rapport de l'existence d'un cristal de type II à l'existence d'un cristal de type I dans la cellulose à modification anionique est de 1,5 ou supérieur.

2. Procédé selon la revendication 1, dans lequel au moins une partie des cycles de pyranose dans la cellulose à modification anionique sont modifiés par substitution, et la conductivité électrique de la dispersion aqueuse à 1,0 % en poids est de 200 $\mu$S/cm ou inférieure.

3. Procédé selon la revendication 1, dans lequel au moins une partie des cycles de pyranose dans la cellulose à modification anionique sont modifiés par oxydation, et une quantité de groupes carboxyle dans la nanofibre de cellulose est de 0,6 à 3,0 mmol/g par rapport à un poids sec absolu de la nanofibre de cellulose.

4. Procédé selon la revendication 1 ou 2, dans lequel au moins une partie des cycles de pyranose dans la cellulose à modification anionique sont modifiés par substitution, et un degré de substitution du carboxyméthyle par unité de glucose de la nanofibre de cellulose est de 0,02 ou supérieur et inférieur à 0,4.

5. Dispersion aqueuse contenant une nanofibre de cellulose à modification anionique, dans laquelle la dispersion aqueuse a une conductivité électrique de 500 $\mu$S/cm ou inférieure lorsqu'elle est mesurée à une concentration de 1,0 % en poids, et dans laquelle un rapport de l'existence d'un cristal de type II à l'existence d'un cristal de type I dans la nanofibre de cellulose à modification anionique est de 1,5 ou supérieur.

6. Dispersion aqueuse selon la revendication 5,
   dans laquelle la dispersion aqueuse a une conductivité électrique de 200 $\mu$S/cm ou inférieure à une concentration de 1,0 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011115154 A